# EUROPEAN PATENT APPLICATION

(11) **EP 1 855 454 A1**
(43) Date of publication of application: **14.11.2007**
(21) Application number: 06009766.4
(22) Date of filing: 11.05.2006
(51) Int. Cl.: H04M 3/56

(54) **Method and apparatus for speaker identification in a conference call**

(71) Applicant: NOKIA SIEMENS NETWORKS S.P.A., 81541 München (DE)
(72) Inventor: Papadimitriou, Dimitris, Dr., 11254 Athen (GR)

(57) **Abstract**

Method, Server and Apparatus for identifying participants in a conference call, wherein the steps of:
establishing the conference call among a plurality of apparatuses via a server, establishing a messaging interface by at least one apparatus to said server for transmitting identity information of a participant using said at least one apparatus, transmitting to the server upon detection of a generated voice signal the identity information, broadcasting by the server the identity information to the plurality of apparatuses in the conference call, and displaying by at least one apparatus the identity information on a display, are executed.

## Description

### Field of the invention

The invention is used in a conference call taking place in a communications system to identify participants taking part and to ensure that this identification is propagated to all participants.

### Summary of the invention

Service providers provide numerous services that are available in today's communications systems. One such service is the conference call service or voice conference service, wherein in order to avoid time waste and increased expenses for travel to a common location for a meeting, participants can use such a service and from their actual location attend a virtual meeting using conference apparatuses.

While such services have the advantage of reducing travel costs and loss of time, they also have the disadvantage that participants have difficulty in recognise and be aware of the participant active in a conference call at a particular moment. This can lead to delays in the conference as well as misunderstandings. The more participants that take part, the probabilities of such problems occurring increases.

In conference call solutions using video conferencing apparatuses, the problem of identification of a user is overcome by using specially designed equipment and/or locations. However such solutions are limited by the latency of the actual links used in the transfer of the data between the participants.

In US 6,304,648 and US2004/0013244 a conference call is set up via multimedia communications devices, whereby voice signals are detected and associated with a user identification which is then transmitted to the other participants in the call.

However, the above proposed solutions are only applicable to classic based signalling such as ISDN (Integrated Services Digital Network) and/or require coupling a conference apparatus such as a central conference server with additional hardware equipment, thus increasing the complexity of the conference call system and the complexity of the signalling required for the control and management of the conference call, as well as the cost of the commissioned infrastructure.

In "Models for Multi-Party Conferencing in SIP", IETF Internet Draft, July 2001 by Rosenberg et al. and "SIP (Session Initiation Protocol), RFC 3261, IETF Internet Draft, June 2002, alternative solutions using the IP (Internet Protocol) are used for the distribution of the list of participants prior to the conference call.

A need therefore exists, for a technique that can in a simple and efficient manner overcome the above mentioned drawbacks, while at the same time being implemented in a number of different signalling environments and being easily adaptable to technology changes as well as not being limited by a number of participants taking part in such conference calls.

With the present invention, the above mentioned issues are resolved. The proposed technique allows for a participant's identity to be made available to participants in a conference call, irrespective of the number of participants or of the type of signalling.

The technique is achieved by the teachings contained in the independent claims.

Said independent method claim identifying participants in a conference call comprises the steps of:
- establishing via a server, said conference call among a plurality of apparatuses;
- establishing a messaging interface for at least one apparatus of said plurality to said server for transmitting identity information of a participant using said at least one apparatus;
- transmitting to said server upon detection of a generated voice signal, said identity information;
- broadcasting by said server said identity information to said plurality of apparatuses being part of said conference call, and
- displaying by at least one apparatus of said plurality said identity information on a display.

Said independent apparatus claim is adapted to identifying participants in a conference call comprising means, wherein:
- establishing means are arranged to establish via a server, said conference call among a plurality of apparatuses;
- establishing means are arranged to establish a messaging interface to said server, said messaging interface communicating identity information identifying at least one participant in said conference call;
- receiving means are arranged to receive said identity information identifying at least one participant in said conference call, and
- display means are arranged to display said received identity information on a display.

Said independent server claim is adapted to identifying participants in a conference call comprising means, wherein:
- establishing means are arranged to establish said conference call among a plurality of apparatuses;
- establishing means are arranged to establish a messaging interface to each one of said plurality of apparatuses, said messaging interface communicating identity information identifying at least one participant in said conference call;
- transceiver means are arranged to receive identity information identifying at least one participant in said conference call;
- detection means are arranged to detect a voice signal of a participant, and
- control means are arranged to broadcast via said transceiver means upon detection of said voice signal the identity information of said participant over said messaging interface, to the remaining plurality of apparatuses being part of said conference call.

The advantage of the above is that identity information of a participant is quickly and simply transmitted to all participants in a conference call. The proposed technique fits easily within the framework of, for example SIP, which has been developed for conference calls having a large number of participants, without having to modify any hardware on the apparatus in order to make it compatible, thus allowing current equipment to be used. Additionally, the transmitted identity information has a very low bandwidth requirement, thus not reducing the efficiency of the transmission of data over the links connecting the participants. Furthermore, the inventive technique has the advantage of being easily implemented in architectures and/or configurations that are designed to work with VoIP (Voice over IP).

Further advantages can be seen in the dependent claims, wherein:

The establishment of the messaging interface is executed in parallel with the establishment of the conference call reducing the amount of time required for setting up conference call. Therefore, reducing the amount of signalling generated and efficiently using the bandwidth available.

Broadcasting, by the server of the identity information comprising of a name and/or an image of a participant in the conference call, takes place asynchronously to the reception of the identity information by the server. In this way, simpler processing is required as the identity information does not need to be mixed immediately with the different data streams. Additionally, the identity information is not limited to being transmitted at conference call set up, but can be broadcasted at any point in time during the conference without affecting the different data streams.

Voice detection is achieved by voice activity detection methods. Using standard and existing detection methods, ease of implementing the inventive technique and simplicity of the apparatuses is achieved.

### Short description of the drawings

The present invention will become more apparent from the description given herein below and from the accompanying drawings which are given by way of information only, and thus are not limitative of the present invention, and wherein:
- Fig. 1,: depicts a communications system wherein a conference call is set up according to the inventive technique.
- Fig. 2,: depicts in a flowchart form the steps of the inventive technique.
- Fig. 3,: depicts in block diagram form, the different means arranged to execute the inventive technique.

### Detailed description of the invention

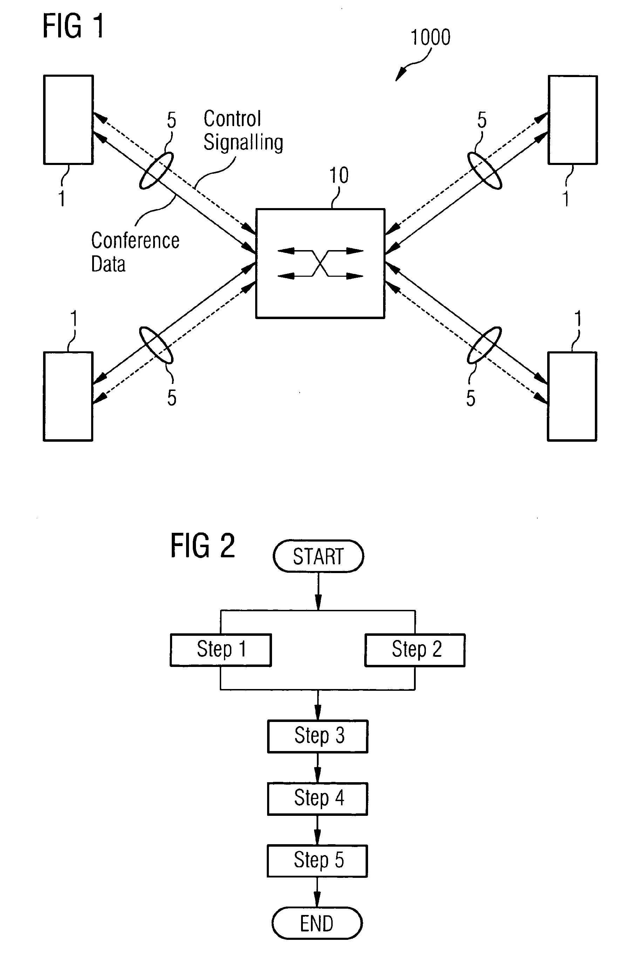

In fig. 1, a communications system 1000 comprises of a server 10 which acts as a central switch for connecting and multiplexing the different data streams generated by a plurality of participants using a plurality of apparatuses 1. The apparatuses 1, can be one of the following: a conference call phone, a mobile phone, a fixed line telephone, a computer such as a PC (Personal Computer) or a laptop computer with conference call support and/or multimedia support, while server 10 can be a conference server, or a centralised conference server or a public switched telephone network (PSTN) conference bridge.

Furthermore, apparatuses 1 each generate a data stream comprising of audio and/or video data that is transmitted along links 5 to server 10. Server 10 in turn multiplexes the received data streams and transmits the streams along over the links 5 to apparatuses 1. Along the same links 5, control signalling is exchanged between the server 10 and each apparatus participating in the conference call. In particular SIP Call Control signalling is used. The communications system 1000 utilises Internet Protocols, and in particular in one embodiment VoIP.

In one illustrative embodiment of the inventive technique, participants use apparatuses 1 to establish a conference call via server 10, wherein server 10 is a conference call server and apparatuses 1 are conference call phones. The establishment of the conference call is performed using standard conference call signalling. Once the call has been established server 10 will mix the received data streams from each apparatus 1 and transmit the appropriate mixed stream to each individual apparatus.

Apparatuses 1 also establish a messaging interface to server 10 for communicating identity information relating to a participant using an apparatus 1. In one embodiment all apparatuses 1 taking part in the conference call establish this messaging interface, in another embodiment at least one apparatus sets up this interface. The messaging interface uses SIP for communicating between server 10 and apparatuses 1. In one embodiment, the messaging interface uses the control signalling of link 5 to communicate the identity information. In another embodiment, the messaging interface uses separate signalling on link 5 to communicate the identity information using SIP.

In order to reduce the amount of signalling and time taken to establish the conference call between apparatuses 1 and server 10, the messaging interface is established in parallel to the establishment of the conference call. Each apparatus 1 maintains a point-to-point signalling and/or a media relationship between itself and server 10, for transmitting control signalling, the identity information and/or the generated conference call data i.e. speech data. The identity information comprises of the name of a participant and/or an image of the participant taking part in the conference call.

Upon establishing the conference call and the messaging interface, voice signals are detected by appropriate voice detection means located on each apparatus 1. These means utilise voice activity detection (VAD) procedures to recognise the presence of voice signals. Such procedures, measure the speech volume to detect when a participant is pausing between sentences or allowing another participant to talk. The difference between the presence and absence of speech, for example when a participant starts or stops speaking is recognised. This results in that only audible speech is transmitted over link 5 from an apparatus 1 to server 10, while silences are not transmitted. Most conference call apparatuses 1 and server 10 use codecs to encode and/or decode data streams. Some well known codecs that can be used are G.726, G.729 (ITU-T (International Telecommunication Union-Telecom) Recommendations, 12/1990 and 03/1996 respectively), which incorporate VAD or G.711 (ITU-T Recommendations, 11/1988) where the VAD function is separate.

Using the abovementioned or other similar procedures to detect the presence of a participant, the name of a participant is transmitted as a text stream comprising for example the name of a participant and/or an image of the participant via the messaging interface to server 10 from apparatus 1. The received identity is then in turn broadcast from the server 10 to all other apparatuses 1 participating in the conference call. The broadcasted identity information is broadcasted using SIP over the messaging interface established by each apparatus 1.

Furthermore, broadcasting the identity information is performed asynchronously, that is at any time during which a participant is active in the context of the session of the conference call. In this way, in the event that two or more participants attempt to speak at the same time, transmission of a number of different identities does not take place. In this way server 10 does not simultaneously transmit two identities. Participants, decide who is to speak. Thus confusion is avoided between participants and server 10 reduces the amount of processing required. The asynchronicity is provided with the aid of control means located at server 10 which upon receiving an identity from an apparatus 1 determine when to broadcast the identity information to the participants in the conference call. Additionally, as the identity information is transmitted asynchronously and not simultaneously to the voice data received, bandwidth resources are not wasted and a higher bandwidth efficiency is achieved.

The identity information of a participant is set-up prior to establishing the conference call, either by the participant providing the required identity information directly to apparatus 1 by inputting the identity information, for example by using the keypad of the apparatus or by a service provider having all the required identity information stored centrally and upon a participant requesting to set up or to join a conference call, downloading the information via server 10 or another network device to the apparatus 1 used by the participant.

In the case that the identity information is provided by the participant directly to apparatus 1, apparatus 1 also has appropriate VAD procedures to detect that the participant is active and then to transmit the identity information over the messaging interface to server 10.

In the case that the identity information is downloaded via server 10, server 10 stores this information and in this way, is made aware of the identity of participants going to take part in the conference and from which apparatus 1 these participants are going to transmit data. In one alternative embodiment, server 10 using appropriate detection procedures detects from the received data packets whether a participant is active, i.e. it detects that the data received relates to voice generated data, and then asynchronously broadcasts the already downloaded identity information over the messaging interfaces to the other participants.

Upon receiving the broadcasted identity information, apparatuses 1 display using display means the identity information received. Display means are adapted to display the text stream comprising the name of the participant and/or the image data, if such data has been received. Such display means can be the screen on a conference call phone or a video screen used for conference calls or a computer screen.

The identity information is transmitted using SIP, and in one embodiment using any one of the defined SIP messages used in conference call exchanges. As contents of the SIP messages are in the MIME (Multipurpose Internet Mail Extensions) format, no change of format is required, when transmitting packets that comprise of the identity information. This is advantageous as it allows for ease of transmission of the identity information without requiring additional software or hardware modifications to the equipment used in conference calls.

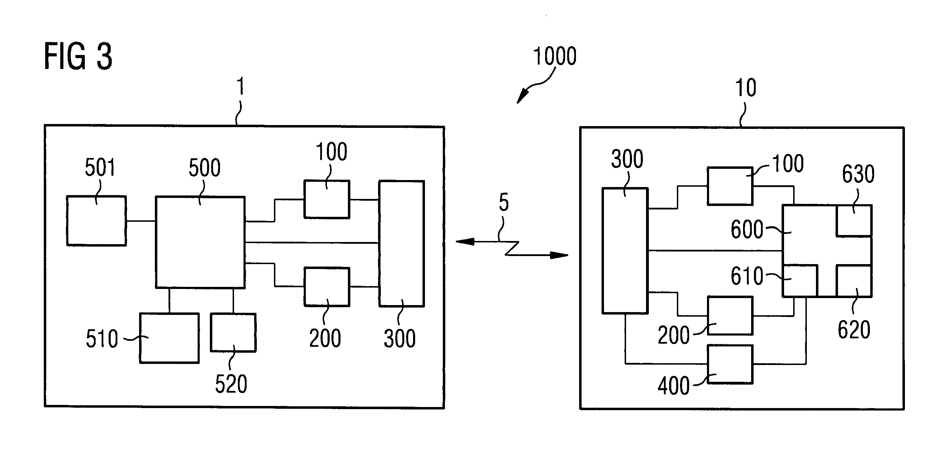

The steps of the inventive technique are depicted in fig. 2. The means arranged to execute the inventive technique shown in fig. 2, are depicted in fig. 3.

In step 1, a conference call is established through apparatus 10. The establishment is initiated upon control means 500 receiving an input signal from an input device 501 of apparatus 1. Input device 501 can be a numeric keypad, a computer keyboard, a touch screen keypad or any other type of input device used by apparatus 1 for inputting and/or keying in commands. Control means 500 in turn transmit a signal to establishing means 100 to set up and establish the conference call through server 10. Communications between apparatuses 1 and server 10 are ensured by transceiver means 300 located on each apparatus. These communications include both control signalling and streaming data generated during the conference call. The control signalling can be signalling generated using SIP, while the streaming data can be RTP (Real-time Transport Protocol) data such as voice and/or image or video data.

In step 2, control means 500 also transmit a signal to interface establishing means 200 that are arranged to establish a messaging interface to server 10.

As mentioned previously, in order to reduce the amount of signalling and time taken to establish the conference call between apparatuses 1 and server 10, the messaging interface is established in parallel to the establishment of the conference call in step 1 by interface establishing means 200.

It is also possible in another embodiment, if the number of participants is low enough and therefore the amount of generated signalling is also low, to execute step 2 after step 1. Upon completion of steps 1 and 2, each apparatus 1 maintains a point-to-point signalling and/or a media relationship with apparatus 10

In step 3, upon detection means 510 located on each apparatus 1 arranged to detect the presence of voice being present, detecting the presence of voice, control means 500 are further arranged to transmit using transceiver means 300 over the established messaging interface, the identity information of the participant using apparatus 1. The identity information is transmitted using SIP, nevertheless control means 500 are further adapted to use other multiparty conference call protocols as well. Additionally, transceiver means 300 are also arranged to transmit and receive control signalling over the messaging interface.

As mentioned previously, the identity information of each participant is set-up prior to establishing the conference call, either by the participant providing the required identity information directly to apparatus 1, by inputting the identity information, for example by using a keypad of the apparatus or by a service provider having all the required identity information stored centrally and upon a participant requesting to set up or to join a conference call, downloads the information via server 10 or another network device to apparatus 1 used by the participant or by the participant requesting an identity from the server 10, by transmitting a message comprising for example of a code and the server 10 providing the participant with an identity. The identity information is stored in memory means 520, which can be a RAM (Random Access Memory), a database or any other type of memory means. Once the messaging interface is to be established, control means 500 are further arranged to retrieve the identity information from memory means 520.

In step 4, upon transceiver means 300 receiving the identity information of a participant using a particular apparatus 1, server 10 has control means 600 arranged to transmit the identity information by means of a broadcast, using transceiver means 300, to the different participants in the conference call.

Server 10 has also mixing means 610 arranged to mix the different data streams received over links 5 and to retransmit them, using transceiver means 300, to the different participants in the conference call. Naturally control means 600 and mixing means 610 are arranged to avoid mixing and retransmitting a received data stream back to the apparatus 1, from where the data stream originated.

Control means 600 are further arranged to broadcast identity information asynchronously to a reception of the identity information, that is, the identity information is broadcasted at any time during which a participant is active in the context of the session of the conference call. This is effected by control means 600 receiving an indication to broadcast by indicating means 620 that indicate to control means 600 when the identity information has to be broadcasted.

Indicating means 620 comprise of a timer, which is activated upon reception of a voice signal from an apparatus 1. The timer can either measure a defined time period or generate and measure a random time period. After expiry of either time period, indicating means 620 provide an indication to control means 600 that the identity of the participant using the apparatus 1 from which the received voice signal originated has to be broadcasted.

Alternatively, indicating means 620 comprise of a counter, which is activated upon reception of a voice signal from an apparatus 1. The counter can measure the amount of data received from each apparatus 1. Upon the measured amount reaching or surpassing a defined threshold value, indicating means 620 provide an indication to control means 600 that the identity of the participant using the apparatus 1 from which the received data originated has to be broadcasted. In both cases, indicating means 620 transmit an indication which can be in the form of an internal message containing an instruction to broadcast or a flag or a specific bit value having the same effect.

In one embodiment, the identity information of a participant is transmitted to the participants in the conference call, once during the period in which the participant is active, while in another embodiment indicating means 620 are further arranged to further indicate to control means 600 to broadcast the identity information after the first broadcast, during the active period of the participant.

Control means 600 are further adapted to retrieve the identity information stored in memory means 630, which can be a RAM (Random Access Memory), a database or any other type of memory means, wherein the identity information of all participants is stored. In one embodiment memory means 630 are comprised in control means 600, in another embodiment memory means 630 are coupled to control means 600.

Server 10 also has detection means 400, arranged to detect that received data packets from apparatuses 1 relate to generated voice signals. In this way, server 10, detects whether a participant is active. In conjunction with indicator means 620 and control means 600 as described above it then asynchronously broadcasts the identity information over the messaging interfaces to the other participants.

In step 5, each apparatus 1, transceiver means 300 on receiving the broadcasted identity information utilise display means 510 arranged to display the received identity. Display means 510, can be a screen on a conference call phone or a video screen used for conference calls or a PC screen or any other suitable displaying means.

In one embodiment, display means 510 are arranged to display the received identities of each participant during the complete session of the conference call and distinguishing between active and inactive participants by means of visual stimuli. For example a flashing and/or brightly displayed identity indicates an active participant, a non-flashing and/or non-brightly displayed identity indicates a passive participant. Acoustic stimuli can also be used independently of any visual stimuli or in combination with such stimuli.

In another embodiment, display means 510 are arranged to display the received identity only during the period or periods, wherein the participant corresponding to the received identity is active. Upon the data stream from a participant ending, transceiver means 300 are arranged to notify control means 500, which in turn indicate to display means 510 to remove the identity from the display. In this embodiment, every time a participant becomes active, indicating means 620 perform the abovementioned operation and the identity information is broadcasted as described hereinabove.

Although the invention has been described in terms of a preferred embodiment described herein, those skilled in the art will appreciate other embodiments and modifications which can be made without departing from the scope of the teachings of the invention. All such modifications are intended to be included within the scope of the claims appended hereto.

## Claims

1. Method for identifying participants in a conference call comprising the steps of:
- establishing via a server (10), said conference call among a plurality of apparatuses (1);
- establishing a messaging interface by at least one apparatus (1) of said plurality to said server (10), said messaging interface communicating identity information identifying at least one participant in said conference call;
- broadcasting by said server (10) upon detection of a generated voice signal of a participant said identity information of said participant over said messaging interface, to the remaining plurality of apparatuses (1) being part of said conference call, and
- displaying by the remaining plurality of apparatuses (1) said received identity information on a display.

2. Method according to claim 1, wherein the steps of establishing said conference call and said messaging interface by said at least one apparatus are executed in parallel.

3. Method according to claim 1, wherein said plurality of apparatuses (1) maintain a point-to-point signalling and/or a media relationship with said server (10).

4. Method according to claim 1, wherein the step of broadcasting said identity information by said server (10) takes place asynchronously to a reception of said identity information by said server (10).

5. Method according to claim 1, wherein detection of said voice signal is performed using at least one voice activity detection method.

6. Method according to any previous claim, wherein said identity information is transmitted over a session initiation protocol.

7. Method according to any one of the previous claims 1 to 6, wherein said identity information is a name and/or an image of a participant in said conference call.

8. Method according to any one of the previous claims 1 to 7, wherein said conference call is a voice conference call or a video conference call.

9. Apparatus (1) adapted to identifying participants in a conference call comprising of:
- establishing means (100) arranged to establish via a server (10), said conference call among a plurality of apparatuses (1) ;
- establishing means (200) arranged to establish a messaging interface to said server (10), said messaging interface communicating identity information identifying at least one participant in said conference call;
- transceiver means (300) arranged to receive said identity information identifying at least one participant in said conference call, and
- display means (510) arranged to display said received identity information on a display.

10. Apparatus (1) according to claim 9, wherein said establishing means (100, 200) are further arranged to establish said conference call and said messaging interface in parallel.

11. Apparatus (1) according to claims 9 or 10, wherein said establishing means (100, 200) are further arranged to maintain a point-to-point signalling and/or a media relationship with said server (10).

12. Apparatus (1) according to any one of preceding claims 9 to 11, wherein control means (500) are adapted to detect a voice signal using at least one voice activity detection method generated at said apparatus (1).

13. Apparatus (1) according to claim 12, wherein control means (500) are further adapted upon detecting said voice signal at said apparatus (1) to transmit over said messaging interface to said server (10), the identity information of the participant at said apparatus (1).

14. Apparatus (1) according to claim 9, wherein said apparatus is at least one of the following:
a conference call telephone, a mobile telephone, a computer.

15. Server (10) adapted to identifying participants in a conference call comprising of:
- establishing means (100) arranged to establish said conference call among a plurality of apparatuses (1);
- establishing means (200) arranged to establish a messaging interface to each one of said plurality of apparatuses (1), said messaging interface communicating identity information identifying at least one participant in said conference call;
- transceiver means (300) arranged to receive identity information identifying at least one participant in said conference call;
- detection means (400) arranged to detect a voice signal of a participant, and
- control means (600) arranged to broadcast via said transceiver means (300) upon detection of said voice signal the identity information of said participant over said messaging interface, to the remaining plurality of apparatuses (1) being part of said conference call.

16. Server (10) according to claim 15, wherein said control means (600) are further arranged to broadcast said identity information asynchronously to a reception of said identity information by said server (10), upon reception of an indication to broadcast provided by indication means (620).

17. Server (10) according to claim 16, wherein said indication means (620) comprise of a timer arranged to measure a time period.

18. Server (10) according to claim 16, wherein said indication means (620) comprise of a counter arranged to measure an amount of data received from each apparatus (1).

19. Server (10) according to claim 15, wherein said establishing means (100, 200) are further arranged to establish said conference call and said messaging interface in parallel.

20. Server (10) according to claims 15 to 19, wherein said server (10) is a centralised conference server or a public switched telephone network conference bridge.

21. Communications system (1000) comprising at least one apparatus (1) according to claims 9 to 14 and at least one server (10) according to claims 15 to 19.

22. Communications system (1000) according to claim 21, arranged to communicate said identity information using a session initiation protocol.
